# EUROPÄISCHE PATENTSCHRIFT

(11) **EP 1 145 864 B1**
(45) Veröffentlichungstag und Bekanntmachung des Hinweises auf die Patenterteilung: **24.08.2005**
(21) Anmeldenummer: 01108239.3
(22) Anmeldetag: 31.03.2001
(51) Int. Cl.: B41M 5/26, C08K 3/08, C08K 3/34, C08K 7/10, C08K 9/00, C09C 1/00, C08L 23/00

(54) **Lasermarkierbare Kunststoffe**
Laser markable plastics
Matieres plastiques pouvant etre marquees au laser

(30) Priorität: 14.04.2000 DE 10018600
(43) Veröffentlichungstag der Anmeldung: 17.10.2001
(73) Patentinhaber: Merck Patent GmbH, 64293 Darmstadt (DE)
(72) Erfinder: Kniess, Helge, 64331 Weiterstadt (DE); Heinz, Dieter, 64646 Heppenheim (DE); Delp, Reiner, 64293 Darmstadt (DE); Pfaff, Gerhard, Dr., 64839 Münster (DE); Kuntz, Matthias, Dr., 64342 Seeheim-Jugenheim (DE)

(56) Entgegenhaltungen:
- EP-A- 0 869 143
- EP-A- 0 950 693

## Beschreibung

Die vorliegende Erfindung betrifft lasermarkierbare Kunststoffe, die sich dadurch auszeichnen, daß sie als Dotierstoff mindestens ein Metall- bzw. Halbmetallpulver ausgewählt aus der Gruppe Aluminium, Bor, Titan, Magnesium, Kupfer, Zinn, Silizium und/oder Zink und ein oder mehrere Effektpigmente auf Basis von Schichtsilikaten enthalten.

Die Kennzeichnung von Produktionsgütern wird in fast allen Industriezweigen zunehmend wichtiger. So müssen häufig z. B. Produktionsdaten, Verfallsdaten, Barcodes, Firmenlogos, Seriennummern, etc., auf Kunststoffen oder Kunststoffolien aufgebracht werden. Derzeit werden diese Markierungen überwiegend mit konventionellen Techniken wie Drucken, Prägen, Stempeln und Etikettieren ausgeführt. Wachsende Bedeutung gewinnt aber die berührungslose, sehr schnelle und flexible Markierung mit Lasern, insbesondere bei Kunststoffen. Mit dieser Technik ist es möglich graphische Beschriftungen, wie z.B. Barcodes, mit hoher Geschwindigkeit auch auf eine nicht plane Oberfläche aufzubringen. Da sich die Beschriftung im Kunststoffkörper selbst befindet, ist sie dauerhaft abriebbeständig.

Viele Kunststoffe, wie z.B. Polyolefine und Polystyrole, lassen sich bisher nur schwierig oder überhaupt nicht mit dem Laser markieren. Ein CO₂-Laser, der Licht im Infrarotbereich bei 10,6 µm aussendet, bewirkt bei Polyolefinen und Polystyrolen selbst bei sehr hohen Leistungen nur eine schwache, kaum lesbare Markierung. Im Falle der Elastomeren Polyurethan und Polyetherestem tritt mit Nd-YAG-Lasern keine Wechselwirkung, bei CO₂-Lasern dagegen eine Gravur auf. Der Kunststoff darf das Laserlicht nicht völlig reflektieren oder durchlassen, da es dann zu keiner Wechselwirkung kommt. Es darf aber auch nicht zu einer starken Absorption kommen, da in diesem Fall der Kunststoff verdampft und nur eine Gravur zurückbleibt. Die Absorption der Laserstrahlen und somit die Wechselwirkung mit der Materie ist abhängig von dem chemischen Aufbau des Kunststoffes und der verwendeten Wellenlänge des Lasers. Vielfach ist es notwendig, damit Kunststoffe laserbeschriftbar werden, entsprechende Zusatzstoffe, z.B. Absorber, zuzugeben.

Aus EP 0 950 693 sind mehrschichtige Perlglanzpigmente bekannt, die sich unter anderem zur Lasermarkierung von polymeren Materialien und Papieren eignen. Die mehrschichtigen Perlglanzpigmente basieren auf plättchenförmigen, nichtmetallischen Substraten, die opak oder semiopak sind und die mindestens eine erste Schicht aus einem Metalloxid mit hoher Brechzahl oder einem Metall, einer zweiten Schicht aus einem Metalloxid mit niedriger Brechzahl, einer dritten Schicht aus einem Metalloxid mit hoher Brechzahl oder einem Metall und gegebenenfalls eine Nachbeschichtung aufweisen.

Für die Laserkennzeichnung von Kunststoffen werden neben CO₂-Lasern zunehmend Nd:YAG-Laser verwendet. Die üblicherweise verwendeten YAG-Laser geben einen gepulsten Energiestrahl mit einer charakteristischen Wellenlänge von 1064 nm oder 532 nm ab. Das Absorbermaterial muß in diesem speziellen NIR-Bereich eine ausgeprägte Absorption zeigen, um bei den schnellen Beschriftungsvorgängen eine ausreichende Reaktion zu zeigen.

Die aus dem Stand der Technik bekannten Dotierstoffe besitzen aber alle den Nachteil, daß sie den zu beschriftenden Kunststoff nachhaltig einfärben und folglich die Laserbeschriftung, die üblicherweise eine dunkle Schrift auf einem hellen Untergrund ist, dann nicht mehr ausreichend kontrastreich ist. Außerdem müssen sie in vergleichsweise hohen Konzentrationen zugesetzt werden und sind häufig toxikologisch nicht unbedenklich.

Aufgabe der vorliegenden Erfindung war es daher lasermarkierbare Kunststoffe zu finden, die unter Einwirkung von Laserlicht eine Markierung mit hohem Kontrast ermöglichen. Der Füllstoff bzw. das erfolgreiche Absorptionsmittel sollte daher eine sehr helle Eigenfarbe besitzen oder nur in sehr geringen Mengen eingesetzt werden müssen.

Überraschenderweise wurde gefunden, daß sich die Lasermarkierbarkeit von Kunststoffen, insbesondere der Kontrast der Markierung verbessern läßt, wenn man ein Gemisch aus Metall- bzw. Halbmetallpulver und ein oder mehrere Effektpigmente auf Basis von Schichtsilikaten verwendet.

Die Lasermarkierung von Kunststoffen mit Perlglanzpigmenten wurde erstmals in Speciality Chemicals, Pearl Lustre Pigments - Characteristics and Functional Effects - May 1982, beschrieben.

Durch den Zusatz eines Metall- bzw. Halbmetallpulvers in Konzentrationen von 0,5 bis 10 Gew.%, vorzugsweise 0,5 bis 7 Gew.%, und insbesondere 0,5 bis 5 Gew.%, bezogen auf das Effektpigment, wird bei der Lasermarkierung von thermoplastischen Kunststoffen ein deutlich höherer Kontrast erreicht.

Gegenstand der Erfindung ist somit ein lasermarkierbarer Kunststoff dadurch gekennzeichnet, daß der thermoplastische Kunststoff als Dotierstoff mindestens ein Metall- bzw. Halbmetallpulver ausgewählt aus der Gruppe Aluminium, Bor, Titan, Magnesium, Kupfer, Zinn, Silizium und/oder Zink und ein oder mehrere Effektpigmente auf Basis von Schichtsilikaten enthält.

Die Konzentration des Dotierstoffs im Kunststoff ist allerdings abhängig von dem eingesetzten Kunststoffsystem. Der geringe Anteil an Dotierstoff verändert das Kunststoffsystem unwesentlich und beeinflußt nicht dessen Verarbeitbarkeit.

Von den genannten Metall- oder Halbmetallpulvem ist Siliziumpulver bevorzugt. Als Dotierstoff können neben dem Effektpigment auch Metall- bzw. Halbmetallpulvergemische eingesetzt werden. Das Mischungsverhältnis beträgt vorzugsweise 1 : 10 bis 10 : 1. Die Metall- bzw. Halbmetallpulver können dabei in jedem Verhältnis miteinander gemischt werden. Bevorzugte Metallpulvergemische sind: Silizium/Bor, Silizium/Aluminium, Bor/Aluminium und Silizium/Zink.

In bestimmten Zusammensetzungen des Dotierstoffs ist der zusätzliche Zusatz geringer Mengen eines Metallhalogenids, vorzugsweise Kalziumchlorid, für den Kontrast der Lasermarkierung des Kunststoffs vorteilhaft.

Transparente Thermoplaste mit den genannten Dotierstoffen in Reineinfärbung zeigen ein leicht metallisches Schimmern, behalten aber ihre Transparenz. Durch den Zusatz von 0,2 bis 10 Gew.%, vorzugsweise 0,5 bis 3 Gew.%, an deckenden Pigmenten, wie z.B. Titandioxid, kann dieser metallische Glanz, insbesondere bei Polyolefinen, bei Bedarf völlig überdeckt werden. Ferner können den Kunststoffen Farbmittel zugesetzt werden, die farbliche Variationen jeder Art zulassen und gleichzeitig eine Beibehaltung der Lasermarkierung gewährleisten. Geeignete Farbmittel sind insbesondere farbige Metalloxidpigmente sowie organische Pigmente und Farbstoffe.

Die für die Markierung geeigneten Effektpigmente basieren vorzugsweise auf plättchenförmigen, vorzugsweise transparenten oder semitransparenten Substraten aus z.B. Schichtsilikaten wie etwa synthetischer oder natürlicher Glimmer, Talk, Kaolin, Sericit. Die Effektpigmente können jedoch auch Glasplättchen, SiO₂-Plättchen, Al₂O₃-Plättchen und/oder TiO₂-Plättchen enthalten.

Besonders bevorzugte Substrate sind mit ein oder mehreren Metalloxiden beschichtete Glimmerschuppen. Als Metalloxide werden dabei sowohl farblose hochbrechende Metalloxide, wie insbesondere Titandioxid und/oder Zinnoxid verwendet als auch gefärbte Metalloxide wie z.B. Antimon-Zinn-Oxid, Eisenoxid (Fe₂O₃, Fe₃O₄) und/oder Chrom(III)-oxid. Zusätzlich können auch noch niedrigbrechende Oxidschichten, wie z.B. Siliziumdioxid beim Pigmentaufbau enthalten sein.

Plättchenförmige Pigmente sind bekannt und größtenteils kommerziell erhältlich, z. B. unter der Marke Iriodin® der Fa. Merck KGaA, oder können nach dem Fachmann bekannten Standardverfahren hergestellt werden. Effektpigmente auf der Basis transparenter oder semitransparenter plättchenförmiger Substrate werden z. B. beschrieben in den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 und 38 42 330.

Besonders geeignete Effektpigmente sind solche, die folgenden Aufbau aufweisen:
Glimmer + SnO₂+ TiO₂
Glimmer + TiO₂
Glimmer + TiO₂ + Fe₂O₃
Glimmer + TiO₂ + (Sn,Sb)O₂

Alle bekannten thermoplastischen Kunststoffe, wie sie z.B. im Ullmann, Bd. 15, S. 457 ff., Verlag VCH beschrieben werden, können für die Lasermarkierung Anwendung finden. Geeignete Kunststoffe sind z.B. Polyethylen, Polypropylen, Polyamide, Polyester, Polyesterester, Polyetherester, Polyphenylenether, Polyacetal, Polybutylenterephthalat, Polymethylmethacrylat, Polyvinylacetal, Polystyrol, Acrylnitril-Butadien-Styrol (ABS), Acrylnitril-Styrol-Acrylester (ASA), Polycarbonat, Polyethersulfone und Polyetherketone sowie deren Copolymeren und/oder Mischungen.

Die Einarbeitung der Effektpigmente und des Metall- bzw. Halbmetallpulvers in den thermoplastischen Kunststoff erfolgt, indem das Kunststoffgranulat mit dem Dotierstoff gemischt und dann unter Wärmeeinwirkung verformt wird. Die Zugabe des Metall- bzw. Halbmetallpulvers bzw. des Pulvergemisches und des Effektpigments zu dem Kunststoff kann gleichzeitig oder nacheinander erfolgen. Dem Kunststoffgranulat können bei der Einarbeitung des Dotierstoffs gegebenenfalls Haftmittel, organische polymerverträgliche Lösungsmittel, Stabilisatoren und/oder unter den Arbeitsbedingungen temperaturstabile Tenside zugesetzt werden. Die Herstellung der dotierten Kunststoffgranulate erfolgt in der Regel so, daß in einem geeigneten Mischer das Kunststoffgranulat vorgelegt, mit eventuellen Zusätzen benetzt und danach der Dotierstoff zugesetzt und untergemischt wird. Die Pigmentierung des Kunststoffes erfolgt in der Regel über ein Farbkonzentrat (Masterbatch) oder Compound. Die so erhaltene Mischung kann dann direkt in einem Extruder oder einer Spritzgießmaschine verarbeitet werden. Die bei der Verarbeitung gebildeten Formkörper zeigen eine sehr homogene Verteilung des Dotierstoffs. Anschließend findet die Lasermarkierung mit einem geeigneten Laser statt.

Gegenstand der Erfindung ist auch ein Verfahren zur Herstellung der erfindungsgemäßen lasermarkierbaren Kunststoffe, dadurch gekennzeichnet, daß ein thermoplastischer Kunststoff mit dem Dotierstoff gemischt und dann unter Wärmeeinwirkung verformt wird.

Die Beschriftung mit dem Laser erfolgt derart, daß der Probenkörper in den Strahlengang eines gepulsten Lasers, vorzugsweise eines Nd:YAG-Lasers gebracht wird. Ferner ist eine Beschriftung mit einem ExcimerLaser, z.B. über eine Maskentechnik, möglich. Jedoch sind auch mit anderen herkömmlichen Lasertypen, die eine Wellenlänge in einem Bereich hoher Absorption des verwendeten Pigments aufweisen, die gewünschten Ergebnisse zu erzielen. Die erhaltene Markierung wird durch die Bestrahlungszeit (bzw. Pulszahl bei Pulslasern) und Bestrahlungsleistung des Lasers sowie des verwendeten Kunststoffsystems bestimmt. Die Leistung der verwendeten Laser hängt von der jeweiligen Anwendung ab und kann im Einzelfall vom Fachmann ohne weiteres ermittelt werden.

Der verwendete Laser hat im allgemeinen eine Wellenlänge im Bereich von 157 nm bis 10,6 µm, vorzugsweise im Bereich von 532 nm bis 10,6 µm. Beispielsweise seien hier CO₂-Laser (10,6 µm) und Nd:YAG-Laser (1064 bzw. 532 nm) oder gepulste UV-Laser erwähnt. Die Excimerlaser weisen folgende Wellenlängen auf: F₂-Excimerlaser (157 nm), ArF-Excimerlaser (193 nm), KrCl-Excimerlaser (222 nm), KrF-Excimerlaser (248 nm), XeCl-Excimerlaser (308 nm), XeF-Excimerlaser (351 nm), frequenzvervielfachte Nd:YAG-Laser mit Wellenlängen von 355 nm (frequenzverdreifacht) oder 265 nm (frequenzvervierfacht). Besonders bevorzugt werden Nd:YAG-Laser (1064 bzw. 532 nm) und CO₂-Laser eingesetzt. Die Energiedichten der eingesetzten Laser liegen im allgemeinen im Bereich von 0,3 mJ/cm² bis 50 J/cm², vorzugsweise 0,3 mJ/cm² bis 10 J/cm². Bei der Verwendung von gepulsten Lasern liegt die Pulsfrequenz im allgemeinen im Bereich von 1 bis 30 kHz. Entsprechende Laser, die im erfindungsgemäßen Verfahren eingesetzt werden können, sind kommerziell erhältlich.

Die Verwendung des erfindungsgemäß pigmentierten Kunststoffes kann auf allen Gebieten erfolgen, wo bisher übliche Druckverfahren zur Beschriftung von Kunststoffen eingesetzt werden. Beispielsweise können Formkörper aus dem erfindungsgemäßen Kunststoff in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus dem erfindungsgemäßen Kunststoff bestehen, können selbst an schwer zugänglichen Stellen mit Hilfe von Laserlicht markiert werden. Weiterhin kann das erfindungsgemäße Kunststoffsystem bei Verpackungen im Lebensmittelbereich oder im Spielzeugbereich eingesetzt werden. Die Markierungen auf den Verpackungen zeichnen sich dadurch aus, daß sie wisch- und kratzfest, stabil bei nachträglichen Sterilisationsprozessen, und hygienisch rein beim Markierungsprozeß aufbringbar sind. Komplette Etikettenbilder können dauerhaft auf die Verpackung für ein Mehrwegsystem aufgebracht werden. Ein weiteres wichtiges Anwendungsgebiet für die Laserbeschriftung sind Kunststoffmarken zur individuellen Kennzeichnung von Tieren, sogenannte Cattle Tags oder Ohrmarken. Über ein Barcodesystem werden die Informationen gespeichert, welche spezifisch dem Tier zugehörig sind. Diese können bei Bedarf wieder mit Hilfe eines Scanners abgerufen werden. Die Beschriftung muß sehr dauerhaft werden, da die Marke teilweise über mehrere Jahre an den Tieren verbleiben.

Die Lasermarkierung von Kunststoffgegenständen bzw. Formkörpern, die aus dem erfindungsgemäßen Kunststoff bestehen, ist somit möglich.

Die folgenden Beispiele sollen die Erfindung erläutern ohne sie jedoch zu begrenzen. Die angegebenen Prozentangaben sind Gewichtsprozent.

### Beispiele

### Beispiel 1

10 g Iriodin® 103 (mit TiO₂ beschichtetes Glimmerpigment der Fa. Merck KGaA, Darmstadt, Deutschland) werden mit 0,2 g Silizium-Pulver (Produkt der Merck KGaA) und 0,07 g wasserfreiem CaCl₂ gemischt.

Ein PP-Granulat (PP-HD, Stamylen PPH 10 der Fa. DSM) wird durch Zusatz von 0,5 % der hergestellten Mischung im Spritzguß verarbeitet. Nach der Beschriftung mit einem CO₂-Laser zeigen die Platten eine dunkle und abriebfeste Beschriftung mit hohem Kontrast.

### Beispiel 2

10 g Minatec® 30 CM (TiO₂-Glimmerpigment mit einer Antimon-Zinnoxidschicht der Merck KGaA) werden mit 0,2 g Silizium-Pulver (Produkt der Merck KGaA) und 0,07 g wasserfreiem CaCl₂ gemischt.

Ein PP-Granulat (PP-HD, Stamylen PPH 10 der Fa. DSM) wird durch Zusatz von 0,5 % der hergestellten Mischung im Spritzguß verarbeitet. Nach der Beschriftung mit einem Nd: YAG-Laser zeigen die Platten eine dunkle und abriebfeste Beschriftung mit hohem Kontrast.

### Beispiel 3

10 g Iriodin® 103 (mit TiO₂ beschichtetes Glimmerpigment der Fa. Merck KGaA, Darmstadt, Deutschland) werden mit 0,2 g Zink-Pulver (Produkt der Merck KGaA) gemischt.

Ein PP-Granulat (PP-HD, Stamylen PPH 10 der Fa. DSM) wird durch Zusatz von 0,5 % der hergestellten Mischung im Spritzguß verarbeitet. Nach der Beschriftung mit einem CO₂-Laser zeigen die Platten eine dunkle und abriebfeste Beschriftung mit hohem Kontrast.

## Patentansprüche

1. Lasermarkierbare Kunststoffe, **dadurch gekennzeichnet, daß** thermoplastische Kunststoffe als Dotierstoff
- mindestens ein Metall- bzw. Halbmetallpulver ausgewählt aus der Gruppe Aluminium, Bor, Titan, Magnesium, Kupfer, Zinn, Silizium und/ oder Zink
und
- ein oder mehrere Effektpigmente auf Basis von Schichtsilikaten enthalten.

2. Lasermarkierbare Kunststoffe nach Anspruch 1, **dadurch gekennzeichnet, daß** das Metall- bzw. Halbmetallpulver Silizium ist.

3. Lasermarkierbare Kunststoffe nach Anspruch 2, **dadurch gekennzeichnet, daß** die thermoplastischen Kunststoffe als Effektpigment Perlglanzpigmente auf Basis von natürlichen oder synthetischen Glimmerplättchen enthalten.

4. Lasermarkierbare Kunststoffe nach einem der Ansprüche 1 bis 3, **dadurch gekennzeichnet, daß** das Perlglanzpigment ein TiO₂ und/oder Antimon-Zinn-Oxid beschichtetes Glimmerpigment ist.

5. Lasermarkierbare Kunststoffe nach einem der Ansprüche 1 bis 4, **dadurch gekennzeichnet, daß** der Anteil an Metall- bzw. Halbmetallpulver 0,5 bis 10 Gew.%, bezogen auf das Effektpigment, beträgt.

6. Lasermarkierbare Kunststoffe nach einem der Ansprüche 1 bis 5, **dadurch gekennzeichnet, daß** der Kunststoff ein Polyethylen, Polypropylen, Polyamid oder ein Polyester ist.

7. Lasermarkierbare Kunststoffe nach einem der Ansprüche 1 bis 6, **dadurch gekennzeichnet, daß** sie zusätzlich ein Metallhalogenid enthalten.

8. Lasermarkierbare Kunststoffe nach einem der Ansprüche 1 bis 7, **dadurch gekennzeichnet, daß** sie zusätzlich Farbpigmente enthalten.

9. Verfahren zur Herstellung von lasermarkierbaren Kunststoffen nach Anspruch 1, **dadurch gekennzeichnet, daß** man zu dem thermoplastischen Kunststoff das Metall- bzw. Halbmetallpulver bzw. deren Gemische und ein oder mehrere Effektpigmente gleichzeitig oder nacheinander und gegebenenfalls weitere Hilfsstoffe gibt und dann den Kunststoff unter Wärmewirkung verformt.

10. Verwendung der lasermarkierbaren Kunststoffe nach Anspruch 1 als Material zur Herstellung von Formkörpern, die mit Hilfe von LaserStrahlung markiert werden.

11. Formkörper bestehend aus dem iasermarkierbaren Kunststoff nach Anspruch 1.

## Claims

1. Laser-markable plastics, **characterised in that** thermoplastics contain, as dopant,
- at least one metal or semimetal powder selected from the group aluminium, boron, titanium, magnesium, copper, tin, silicon and/or zinc
and
- one or more effect pigments based on phyllosilicates.

2. Laser-markable plastics according to Claim 1, **characterised in that** the metal or semimetal powder is silicon.

3. Laser-markable plastics according to Claim 2, **characterised in that** the thermoplastics contain, as effect pigment, pearlescent pigments based on natural or synthetic mica flakes.

4. Laser-markable plastics according to one of Claims 1 to 3, **characterised in that** the pearlescent pigment is a TiO₂- and/or antimony tin oxide-coated mica pigment.

5. Laser-markable plastics according to one of Claims 1 to 4, **characterised in that** the proportion of metal or semimetal powder is 0.5 to 10% by weight, based on the effect pigment.

6. Laser-markable plastics according to one of Claims 1 to 5, **characterised in that** the plastic is a polyethylene, polypropylene, polyamide or a polyester.

7. Laser-markable plastics according to one of Claims 1 to 6, **characterised in that** they additionally contain a metal halide.

8. Laser-markable plastics according to one of Claims 1 to 7, **characterised in that** they additionally contain coloured pigments.

9. Process for the preparation of laser-markable plastics according to Claim 1, **characterised in that** the metal or semi-metal powder or mixtures thereof and one or more effect pigments, simultaneously or successively, and optionally further assistants are added to the thermoplastic, and the plastic is then shaped under the action of heat.

10. Use of the laser-markable plastics according to Claim 1 as material for the production of mouldings which are marked with the aid of laser radiation.

11. Moulding consisting of the laser-markable plastic according to Claim 1.

## Revendications

1. Matières plastiques marquables au laser, **caractérisées en ce que** des matières thermoplastiques comprennent, en tant que dopant,
- au moins une poudre de métal ou de semi-métal choisie parmi le groupe aluminium, bore, titane, magnésium, cuivre, étain, silicium et/ou zinc
et
- un ou plusieurs pigments d'effet basés sur phyllosilicates.

2. Matières plastiques marquables au laser selon la revendication 1, **caractérisées en ce que** la poudre de métal ou de semi-métal est du silicium.

3. Matières plastiques marquables au laser selon la revendication 2, **caractérisées en ce que** les matières thermoplastiques comprennent, en tant que pigment d'effet, des pigments perlés basés sur flocons de mica naturels ou synthétiques.

4. Matières plastiques marquables au laser selon l'une des revendications 1 à 3, **caractérisées en ce que** le pigment perlé est un pigment de mica revêtu de TiO₂ et/ou d'oxyde d'étain et d'antimoine.

5. Matières plastiques marquables au laser selon l'une des revendications 1 à 4, **caractérisées en ce que** la proportion de poudre de métal ou de semi-métal est de 0,5 à 10% en poids, sur la base du pigment d'effet.

6. Matières plastiques marquables au laser selon l'une des revendications 1 à 5, **caractérisées en ce que** la matière plastique est un polyéthylène, un polypropylène, un polyamide ou un polyester.

7. Matières plastiques marquables au laser selon l'une des revendications 1 à 6, **caractérisées en ce qu'**elles comprennent de façon additionnelle un halogénure de métal.

8. Matières plastiques marquables au laser selon l'une des revendications 1 à 7, **caractérisées en ce qu'**elles comprennent de façon additionnelle des pigments colorés.

9. Procédé pour la préparation de matières plastiques marquables au laser selon la revendication 1, **caractérisé en ce que** la poudre de métal ou de semi-métal ou des mélanges afférents et un ou plusieurs pigments d'effet, de façon simultanée ou en succession, et en option des adjuvants supplémentaires sont ajoutés à la matière thermoplastique, et la matière plastique est ensuite conformée sous l'action de la chaleur.

10. Utilisation des matières plastiques marquables au laser selon la revendication 1 en tant que matériau pour la production de moulages qui sont marqués à l'aide d'un rayonnement laser.

11. Moulage constitué par la matière plastique marquable au laser selon la revendication 1.
